# EUROPEAN PATENT SPECIFICATION

(11) **EP 4 660 466 B1**
(45) Date of publication and mention of the grant of the patent: **14.10.2026**
(21) Application number: 24179710.9
(22) Date of filing: 03.06.2024
(51) Int. Cl.: F16B 2/22, F16B 5/00, F16B 5/06

(54) **CONNECTING ELEMENT AND CONSTRUCTION SET**
VERBINDUNGSELEMENT UND BAUSATZ
ÉLÉMENT DE LIAISON ET ENSEMBLE DE CONSTRUCTION

(43) Date of publication of application: 10.12.2025
(73) Proprietor: Acies Konsulting AB, 718 96 Dyltabruk (SE)
(72) Inventor: Krook, Erik, 703 80 Örebro (SE)
(74) Representative: Bjerkén Hynell KB

(56) References cited:
- EP-A1- 3 882 473
- WO-A1-95/25898
- WO-A1-99/67541
- DE-A1- 102011 014 152
- GB-A- 2 263 933

## Description

The invention is primarily for hidden, demountable joining of various building elements, such as panels and Woodwork. with the advantage of being able to easily disassemble and reuse the joined parts.

In DE102011014152A1 an element (10) has a connecting bar (11) provided with two opposite longitudinal ends (12, 12'), and dowels secured on both longitudinal sides of the connecting bar and extending in a longitudinal direction. Resilient spring elements (14, 14', 15, 15') are formed so that distance of the spring elements to a longitudinal center plane (LE) of the bar increases up to maximum distance in sections (16, 16') and distance of the spring elements to the plane decreases to a free end of the spring elements in other sections (17, 17'), where the free end is turned away from the bar. Also, there is a clip disclosed in GB2263933A, which is designed for insertion in the restricted openings of plates, struts, or the downwardly opening dove tail channels of metal decking. WO9525898A1 discloses a known connecting element.

The invention is a connecting element according to claim 1. One advantage, in particular, with the element as set out in claim 1, a connecting element (1) for connecting construction members (3), such as wood construction members (3) for buildings, the connecting element (1) comprising a base part (5) and at least two legs (6.1, 6.2) extending from the base part (5) towards free ends (8.1, 8.2) of respective leg (6.1, 6.2), wherein the at least two legs (6.1, 6.2) form a first pair of elastic legs configured such as the free ends (8.1, 8.2) of respective leg (6.1, 6.2) are movable towards each other and in a direction from each other for connecting of the construction members (3), wherein each of the at least two legs (6.1, 6.2) comprises:
- a first portion (9) having contact with the base portion (5) and being arranged with a first angle (a1) in relation to the base portion (5), wherein the first angle (a1) is measured on the side of the first portion (9) facing the other leg of the at least two legs (6.1, 6.2),
- a second portion (11) having contact with the first portion (9) and being arranged with a second angle (a2) in relation to the first portion (9), wherein the second portion (11) extends in a direction from the other leg of the at least two legs (6.1, 6.2), wherein the second angle (a2) is measured on the opposite side on the second portion (11) to the side of the second portion (11) facing the other leg of the at least two legs (6.1, 6.2),
- a third portion (13) having contact with the second portion (11) and being arranged with a third angle angle (a3) in relation to the second portion (11), wherein the third portion (13) extends in a direction towards the other leg of the at least two legs (6.1, 6.2) and wherein the third angle (a3) is measured on the side of the third portion (13) facing the other leg of the at least two legs (6.1, 6.2), wherein the first angle (a1) is 90°, wherein the second angle (a2) is between 130° and 175°, and wherein the third angle (a3) is between 70° and 100°,
, and in its dependent claims, is that it is easily demountable.

The construction set, as set out in claim 7 and in its dependent claims, also has a corresponding advantage.

The invention intends to be able to easily join various smaller building elements such as finished painted panels, window and door openings, panels and joinery where you do not want a visible attachment but at the same time have the option to remove or replace a part/panel. Of the possible solutions today, you usually get a visible attachment or This is how you glue these elements, which makes it difficult to replace them if necessary, or for example to be able to inspect the underlying technology.

The Hookclips enable a simple assembly where you simply click two elements together using the (1) clip, in the pre-milled (2) grooves. You can then easily "pluck" the joint and reassemble it again or replace one part. The invention is also cost-effective and can be produced from recycled material which can then also be reused.

The clip / invention (C) is a clip made of recycled plastic, it can have varying sizes for different purposes, further in the description and figures we assume a model that can fit in subjects that are max. 28mm wide. (A), (B), (b1).

The principle is based on a "rocker function" mechanism that completely mechanically joins two elements/substances against each other and creates a pressure against each other.

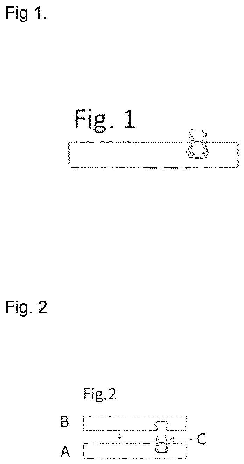

The clip (C) is placed in the first blank (A) according to Fig. 1.

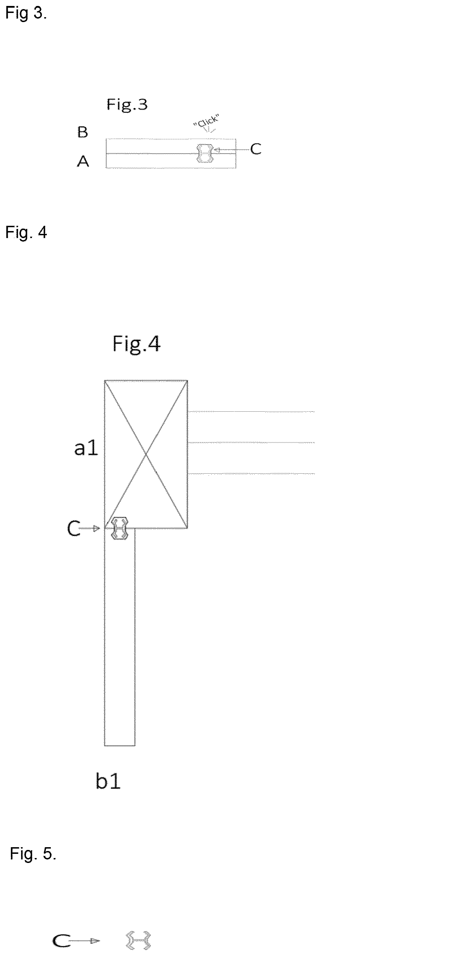

Then the material (B) is lined up with the clip (C) and press until a "Click" is heard. According to Fig.3

The design of the milling groove and the clip means that the clip can be deformed / "folded" together as long as the clip is only in one object according to Fig.1.

As soon as subject A & B are joined using the clip (C), the subject / building elements are pushed against each other and this create a very tight joining. With the help of the pressure they arise, you achieve a good joining and stability in the horizontal position.

You can also imagine mounting the clip (C) according to fig.4 dr we imagine that Subject (a1) illustrates a window frame subject, and subject (b1) a finished lacquered window moulding.

When the Clipset (C) is mounted according to one of the figures Fig.1 tom. Fig 4. Then the subjects/elements can then be dismantled and reassembled several times. which is good for the environment and the economy.

The clip should make it possible to easily and cost-effectively join two substances without visible joints. The Clipset must also enable easy disassembly if necessary and that you can once again reassemble the Clipset and join the two subjects. The clip will enable installation horizontally, vertically and hanging from, for example, a ceiling.

Drawings and figures.
Fig. 1
Fig. 2
Fig. 3
Fig. 4
Fig. 5 shows C = clips / one aspect of the present invention

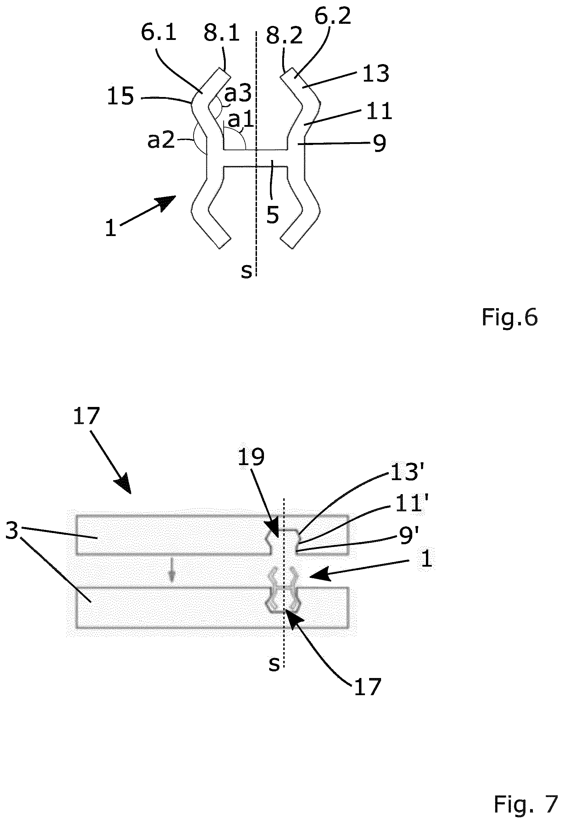

Fig 6: aspect of the present invention. Reflected also in the appended claims
Fig 7: aspect of the present invention. Reflected also in the appended claims
   Element =A
   Element =B
   Element = a1
   Element = b1

## Claims

1. A connecting element (1) for connecting construction members (3), such as wood construction members (3) for buildings, the connecting element (1) comprising a base part (5) and at least two legs (6.1, 6.2) extending from the base part (5) towards free ends (8.1, 8.2) of respective leg (6.1, 6.2), wherein the at least two legs (6.1, 6.2) form a first pair of elastic legs configured such as the free ends (8.1, 8.2) of respective leg (6.1, 6.2) are movable towards each other and in a direction from each other for connecting of the construction members (3), wherein each of the at least two legs (6.1, 6.2) comprises:
- a first portion (9) having contact with the base portion (5) and being arranged with a first angle (a1) in relation to the base portion (5), wherein the first angle (a1) is measured on the side of the first portion (9) facing the other leg of the at least two legs (6.1, 6.2),
- a second portion (11) having contact with the first portion (9) and being arranged with a second angle (a2) in relation to the first portion (9), wherein the second portion (11) extends in a direction from the other leg of the at least two legs (6.1, 6.2), wherein the second angle (a2) is measured on the opposite side on the second portion (11) to the side of the second portion (11) facing the other leg of the at least two legs (6.1, 6.2),
- a third portion (13) having contact with the second portion (11) and being arranged with a third angle angle (a3) in relation to the second portion (11), wherein the third portion (13) extends in a direction towards the other leg of the at least two legs (6.1, 6.2) and wherein the third angle (a3) is measured on the side of the third portion (13) facing the other leg of the at least two legs (6.1, 6.2), **characterized in that**, the first angle (a1) is 90°, **in that** the second angle (a2) is between 130° and 175°, and **in that** the third angle (a3) is between 70° and 100°.

2. The connecting element (1) according to any one of the preceding claims, wherein the at least two legs (6.1, 6.2) are symmetrical in relation to a plane (s) extending through the base part (5).

3. The connecting element (1) according to any one of the preceding claims, wherein the connecting element (1) is a one-piece element.

4. The connecting element (1) according to any one of the preceding claims, wherein the connecting element is of a plastic material.

5. The connecting element (1) according to any one of the preceding claims, comprising two pairs of legs (6.1, 6.2), wherein the second pair of legs is arranged on the opposite side of the base portion (5) in relation to the first pair of legs (6.1, 6.2).

6. The connecting element (1) according to any one of the preceding claims, wherein the second portion (11) and the third portion (13) form a knee (1) protruding outwards from the base part (5) and the first portion (9).

7. A construction set (17), such as wood construction set for buildings, the construction set comprising two construction members (3) and a connecting element (1) according to any one of claims 1 to 6, wherein at least one of the construction members (3) comprises a groove (19) configured to receive a pair of legs (6.1, 6.2) for connecting of the construction members (3), wherein the groove (19) has a form corresponding to the form of the pair of legs (6.1, 6.2), wherein the groove (19) has inner surface comprising:
- a first section (9') configured to cooperate with the first portion (9) of one of the legs (6.1, 6.2),
- a second section (11') configured to cooperate with the second portion (11) of one of the legs (6.1, 6.2) and
- a third section (13') configured to cooperate with the third portion (13) of one of the legs (6.1, 6.2).

8. The construction set (17) according to claim 7, wherein the base portion (5) comprises at least one hole for attaching of the connecting element (1) to one construction member (3) of the two construction members (3), such as a hole for a screw.

9. The construction set (17) according to claim 7, wherein each construction member (3) of the two construction members (3) comprises groove (19).

## Patentansprüche

1. Verbindungselement (1) zum Verbinden von Bauteilen (3), wie beispielsweise Holzbauteilen (3) für Gebäude, wobei das Verbindungselement (1) einen Basisbereich (5) und mindestens zwei Schenkel (6.1, 6.2) umfasst, die sich von dem Basisbereich (5) zu freien Enden (8.1, 8.2) des jeweiligen Schenkels (6.1, 6.2) erstrecken, wobei die mindestens zwei Schenkel (6.1, 6.2) ein erstes Paar elastischer Schenkel bilden, das so konfiguriert ist, dass die freien Enden (8.1, 8.2) des jeweiligen Schenkels (6.1, 6.2) aufeinander zu und in eine Richtung voneinander weg zum Verbinden der Bauteile (3) bewegbar sind, wobei jeder der mindestens zwei Schenkel (6.1, 6.2) Folgendes umfasst:
- einen ersten Abschnitt (9), der mit dem Basisabschnitt (5) in Kontakt steht und in einem ersten Winkel (a1) in Bezug auf den Basisabschnitt (5) angeordnet ist, wobei der erste Winkel (a1) auf der Seite des ersten Abschnitts (9), die dem anderen Schenkel der mindestens zwei Schenkel (6.1, 6.2) zugewandt ist, gemessen wird,
- einen zweiten Abschnitt (11), der mit dem ersten Abschnitt (9) in Kontakt steht und in einem zweiten Winkel (a2) in Bezug auf den ersten Abschnitt (9) angeordnet ist, wobei sich der zweite Abschnitt (11) in einer Richtung von dem anderen Schenkel der mindestens zwei Schenkel (6.1, 6.2) weg erstreckt, wobei der zweite Winkel (a2) auf der Seite auf dem zweiten Abschnitt (11), die der Seite des zweiten Abschnitts (11), die dem anderen Schenkel der mindestens zwei Schenkel (6.1, 6.2) zugewandt ist, gegenüber liegt, gemessen wird,
- einen dritten Abschnitt (13), der mit dem zweiten Abschnitt (11) in Kontakt steht und in einem dritten Winkel (a3) in Bezug auf den zweiten Abschnitt (11) angeordnet ist, wobei sich der dritte Abschnitt (13) in eine Richtung hin zu dem anderen Schenkel der mindestens zwei Schenkel (6.1, 6.2) erstreckt und wobei der dritte Winkel (a3) auf der Seite des dritten Abschnitts (13), die dem anderen Schenkel der mindestens zwei Schenkel (6.1, 6.2) zugewandt ist, gemessen wird, **dadurch gekennzeichnet, dass** der erste Winkel (a1) bei 90° liegt, dass der zweite Winkel (a2) zwischen 130° und 175° liegt und dass der dritte Winkel (a3) zwischen 70° und 100° liegt.

2. Verbindungselement (1) nach einem der vorhergehenden Ansprüche,
wobei die mindestens zwei Schenkel (6.1, 6.2) symmetrisch in Bezug zu einer Ebene (s) sind, die sich durch den Basisbereich (5) erstreckt.

3. Verbindungselement (1) nach einem der vorhergehenden Ansprüche, wobei das Verbindungselement (1) ein einteiliges Element ist.

4. Verbindungselement (1) nach einem der vorhergehenden Ansprüche, wobei das Verbindungselement aus einem Kunststoffmaterial besteht.

5. Verbindungselement (1) nach einem der vorhergehenden Ansprüche, umfassend zwei Paare von Schenkeln (6.1, 6.2), wobei das zweite Paar von Schenkeln auf der gegenüberliegenden Seite des Basisabschnitts (5) in Bezug auf das erste Paar von Schenkeln (6.1, 6.2) angeordnet ist.

6. Verbindungselement (1) nach einem der vorhergehenden Ansprüche, wobei der zweite Abschnitt (11) und der dritte Abschnitt (13) ein Knie (1) bilden, das von dem Basisbereich (5) und dem ersten Abschnitt (9) nach außen vorsteht.

7. Bausatz (17), wie beispielsweise ein Holzbausatz für Gebäude, wobei der Bausatz zwei Bauteile (3) und ein Verbindungselement (1) nach einem der Ansprüche 1 bis 6 umfasst, wobei mindestens eines der Bauteile (3) eine Nut (19) umfasst, die dazu konfiguriert ist, ein Paar von Schenkeln (6.1, 6.2) zum Verbinden der Bauteile (3) aufzunehmen, wobei die Nut (19) eine Form aufweist, die der Form des Paares von Schenkeln (6.1, 6.2) entspricht, wobei die Nut (19) eine Innenfläche aufweist, die Folgendes umfasst:
- eine erste Sektion (9'), die dazu konfiguriert ist, mit dem ersten Abschnitt (9) eines der Schenkel (6.1, 6.2) zusammenzuwirken,
- eine zweite Sektion (11'), die dazu konfiguriert ist, mit dem zweiten Abschnitt (11) eines der Schenkel (6.1, 6.2) zusammenzuwirken, und
- eine dritte Sektion (13'), die dazu konfiguriert ist, mit dem dritten Abschnitt (13) eines der Schenkel (6.1, 6.2) zusammenzuwirken.

8. Bausatz (17) nach Anspruch 7, wobei der Basisabschnitt (5) mindestens eine Öffnung zum Befestigen des Verbindungselements (1) an einem Bauteil (3) der zwei Bauteile (3), wie beispielsweise eine Öffnung für eine Schraube, umfasst.

9. Bausatz (17) nach Anspruch 7, wobei jedes Bauteil (3) der zwei Bauteile (3) Nut (19) umfasst.

## Revendications

1. Élément de liaison (1) destiné à relier des organes de construction (3), tels que des organes de construction (3) en bois pour bâtiments, l'élément de liaison (1) comprenant une partie de base (5) et au moins deux branches (6.1,6.2) s'étendant depuis la partie de base (5) vers des extrémités libres (8.1, 8.2) de branche (6.1, 6.2) respective, dans lequel les au moins deux branches (6.1,6.2) forment une première paire de branches élastiques configurée de telle sorte que les extrémités libres (8.1, 8.2) de branche (6.1, 6.2) respective sont mobiles l'une vers l'autre et dans une direction s'éloignant l'une de l'autre pour la liaison des organes de construction (3), dans lequel chacune des au moins deux branches (6.1,6.2) comprend :
- une première portion (9) ayant un contact avec la portion de base (5) et étant agencée avec un premier angle (a1) par rapport à la portion de base (5), dans lequel le premier angle (a1) est mesuré sur le côté de la première portion (9) faisant face à l'autre branche parmi les au moins deux branches (6.1, 6.2),
- une deuxième portion (11) ayant un contact avec la première portion (9) et étant agencée avec un deuxième angle (a2) par rapport à la première portion (9), dans lequel la deuxième portion (11) s'étend dans une direction s'éloignant de l'autre branche parmi les au moins deux branches (6.1,6.2), dans lequel le deuxième angle (a2) est mesuré sur le côté de la deuxième portion (11) opposé au côté de la deuxième portion (11) faisant face à l'autre branche parmi les au moins deux branches (6.1,6.2),
- une troisième portion (13) ayant un contact avec la deuxième portion (11) et étant agencée avec un troisième angle angle (a3) par rapport à la deuxième portion (11), dans lequel la troisième portion (13) s'étend dans une direction vers l'autre branche parmi les au moins deux branches (6.1, 6.2) et dans lequel le troisième angle (a3) est mesuré sur le côté de la troisième portion (13) faisant face à l'autre branche parmi les au moins deux branches (6.1, 6.2), **caractérisé en ce que**, le premier angle (a1) est de 90°, **en ce que** le deuxième angle (a2) est entre 130° et 175°, et **en ce que** le troisième angle (a3) est entre 70° et 100°.

2. Élément de liaison (1) selon l'une quelconque des revendications précédentes,
dans lequel les au moins deux branches (6.1,6.2) sont symétriques par rapport à un plan (s) s'étendant à travers la partie de base (5).

3. Élément de liaison (1) selon l'une quelconque des revendications précédentes, dans lequel l'élément de liaison (1) est un élément monobloc.

4. Élément de liaison (1) selon l'une quelconque des revendications précédentes, dans lequel l'élément de liaison est en matière plastique.

5. Élément de liaison (1) selon l'une quelconque des revendications précédentes, comprenant deux paires de branches (6.1, 6.2), dans lequel la deuxième paire de branches est agencée sur le côté opposé de la portion de base (5) par rapport à la première paire de branches (6.1, 6.2).

6. Élément de liaison (1) selon l'une quelconque des revendications précédentes, dans lequel la deuxième portion (11) et la troisième portion (13) forment un genou (1) faisant saillie vers l'extérieur depuis la portion de base (5) et la première portion (9).

7. Ensemble de construction (17), tel qu'un ensemble de construction en bois pour bâtiments, l'ensemble de construction comprenant deux organes de construction (3) et un élément de liaison (1) selon l'une quelconque des revendications 1 à 6, dans lequel au moins l'un parmi les organes de construction (3) comprend une rainure (19) configurée pour recevoir une paire de branches (6.1, 6.2) pour la liaison des organes de construction (3), dans lequel la rainure (19) présente une forme correspondant à la forme de la paire de branches (6.1, 6.2), dans lequel la rainure (19) présente une surface intérieure comprenant :
- une première section (9') configurée pour coopérer avec la première portion (9) de l'une parmi les branches (6.1, 6.2),
- une deuxième section (11') configurée pour coopérer avec la deuxième portion (11) de l'une parmi les branches (6.1,6.2) et
- une troisième section (13') configurée pour coopérer avec la troisième portion (13) de l'une parmi les branches (6.1,6.2).

8. Ensemble de construction (17) selon la revendication 7, dans lequel la portion de base (5) comprend au moins un trou destiné à fixer l'élément de liaison (1) à un organe de construction (3) parmi les deux organes de construction (3), tel qu'un trou pour une vis.

9. Ensemble de construction (17) selon la revendication 7, dans lequel chaque organe de construction (3) parmi les deux organes de construction (3) comprend une rainure (19).
